# EUROPEAN PATENT APPLICATION

(11) **EP 4 454 881 A1**
(43) Date of publication of application: **30.10.2024**
(21) Application number: 22910606.7
(22) Date of filing: 31.10.2022
(51) Int. Cl.: B32B 27/00, B32B 15/085, B32B 27/32, B32B 27/36, H01M 8/10, H01M 8/1004, H01M 8/1039, H01M 8/1067

(54) **RELEASE FILM AND LAYERED PRODUCT THEREOF, AND PRODUCTION METHOD FOR FILM ELECTRODE ASSEMBLY**

(30) Priority: 20.12.2021 JP 2021206518
(71) Applicant: Daicel Corporation, Osaka-shi, Osaka 530-0011 (JP)
(72) Inventor: NISHIMURA, Kanae, Tokyo 108-8230 (JP); CHIASHI, Masanori, Amagasaki-shi, Hyogo 661-0964 (JP); TANAKA, Ryotaro, Amagasaki-shi, Hyogo 661-0964 (JP)
(74) Representative: Grünecker Patent- und Rechtsanwälte PartG mbB
(86) International application number: PCT/JP2022/040663
(87) International publication number: WO 2023/119886

(57) **Abstract**

There are provided a mold release film having excellent handleability and mold releasability even when used in a high-temperature environment, a laminate thereof, and an application thereof. A mold release film is prepared to include at least a substrate layer and a mold release layer directly or indirectly layered on at least one surface of the substrate layer. The mold release layer contains a polypropylene-based resin. The mold release film may have a thermal shrinkage rate of approximately 4.0% or less when subjected to a heating treatment under conditions of 160°C and 15 minutes. Further, a mold release film may be prepared to include at least a mold release layer containing a polypropylene-based resin. The mold release film has a thermal shrinkage rate of 4.0% or less when subjected to a heating treatment under conditions of 160°C and 15 minutes.

## Description

### Technical Field

The present disclosure relates to a mold release film useful in mold release or the like in various fields such as foods, pharmaceuticals, chemicals, optical members, and electric/electronic materials, a laminate thereof, and an application thereof.

### Background Art

In general, it is known that a mold release film is used as a support for supporting an object (for example, a support or a support substrate for forming a polymer layer). The mold release film is required to have contradictory properties of mold releasability (releasability) with respect to, and steady contact with, an object to be supported in a moderate balance (hereinafter, also simply referred to as moderate mold releasability). That is, if the mold releasability is insufficient, when the mold release film is released from the object to be supported (polymer layer or the like), the object to be supported may remain on the mold release film (or may not be able to be transferred to another member) or may be broken. On the other hand, if the mold releasability is too high, moderate steady contact between the object to be supported and the mold release film cannot be ensured and lifting is likely to occur, and the mold release film may be released in a step that does not require releasing of the mold release film [for example, layering of the object to be supported (polymer layer or the like) and the mold release film, storage and/or conveyance of the resulting laminate, or the like], or particularly when the mold release film includes a mold release layer and a substrate layer, the mold release layer is easily released from the substrate layer, and there is a possibility that the mold release film cannot play a role as a support.

Typical mold release films include polyolefin films, polyester films, silicone-based mold release coat films, fluororesin-based films, and the like, but they have advantages and disadvantages in their properties depending on the type of mold release film, and compatibility between the mold release film and the object to be supported (for example, a polymer layer formed on a surface of the mold release layer, particularly an ion exchange layer containing an ion exchange resin or the like) cannot always be easily predicted as described above.

As a mold release film for producing an assembly of an electrode membrane and/or an electrolyte membrane for a solid polymer type fuel cell, for example, JP 2003-285396 A (Patent Document 1) discloses a substrate film for producing an electrode membrane and/or an electrolyte membrane in which a support film and a film having mold releasability on at least one surface thereof are layered, and describes that the film having mold releasability is made of a fluorine-based resin.

Comparative Example 1 of Patent Document 1 describes that, when a coating film of a paste containing platinum catalyst-supporting carbon and an electrolyte membrane solution was formed on a stretched polypropylene single film (OPP) and the coating film was dried at 130°C, wrinkles or releasing due to shrinkage of the film occurred.

JP 2012-181939 A (Patent Document 2) discloses a carrier film for a catalyst layer having a predetermined first layer and a second layer containing a specific olefin-based resin. Patent Document 2 teaches only a high-density polyethylene (HDPE) as the olefin-based resin of the second layer having a surface on which a catalyst layer is formed, and describes, in the Examples, that, when a specific HDPE was used as the second layer, a membrane catalyst layer assembly produced through a heating treatment at a temperature from 80 to 130°C had good transfer property and power generation performance.

### Citation List

### Patent Document

Patent Document 1: JP 2003-285396 A
Patent Document 2: JP 2012-181939 A

### Summary of Invention

### Technical Problem

However, the polyolefin films described in Patent Documents 1 and 2 may be insufficient in heat resistance, dimensional stability, and mechanical strength depending on use conditions. In particular, depending on the application (for example, in an application for producing an assembly of an electrode membrane and/or an electrolyte membrane for a solid polymer type fuel cell), they may be used under processing conditions (such as high-temperature conditions) severer than commonly used ones in order to improve production efficiency. In such a case, the polyolefin films described in Patent Documents 1 and 2 assuming a relatively low pressing temperature may not sufficiently function as mold release films.

Accordingly, an object of the present disclosure is to provide a mold release film having excellent handleability and mold releasability even when used in a high-temperature environment, a laminate thereof, and an application thereof.

Another object of the present disclosure is to provide a mold release film having moderate mold releasability even when an ion exchange layer containing an ion exchange resin is formed, layered, or transferred under a high-temperature environment, a laminate thereof, and an application thereof.

Still another object of the present disclosure is to provide a mold release film having moderate mold releasability even from an ion exchange layer containing an ion exchange resin having a low equivalent weight (or a high ion exchange capacity), a laminate thereof, and an application thereof.

### Solution to Problem

As a result of intensive studies to achieve the objects, the present inventors have found that, when a mold release layer of a specific mold release film is formed of a polypropylene-based resin, handleability and mold releasability are excellent even when used in a high-temperature environment, and have completed the present invention.

That is, the mold release film of the present disclosure may be a mold release film including at least a substrate layer and a mold release layer directly or indirectly layered on at least one surface of the substrate layer. The mold release layer contains a polypropylene-based resin.

The substrate layer may contain a metal and/or a resin, and may contain at least one selected from the group consisting of a polyolefin-based resin, a polyvinyl alcohol-based resin, a polyester-based resin, a polyamide-based resin, a polyimide-based resin, and a cellulose derivative. The substrate layer may contain at least a polyalkylene arylate-based resin. An average thickness of the substrate layer may be approximately from 5 to 500 µm. The mold release film may have a thermal shrinkage rate of approximately 4.0% or less when subjected to a heating treatment under conditions of 160°C and 15 minutes.

Note that the present disclosure also encompasses a mold release film including at least a mold release layer containing a polypropylene-based resin, wherein the mold release film has a thermal shrinkage rate of 4.0% or less when subjected to a heating treatment under conditions of 160°C and 15 minutes.

The mold release layer may be formed of a non-stretched film containing the polypropylene-based resin. A proportion of a propylene unit with respect to all constituent units of the polypropylene-based resin may be approximately 50 mol% or greater. An average thickness of the mold release layer may be approximately from 1 to 100 µm. The mold release film may be a mold release film for an ion exchange layer containing an ion exchange resin.

The present disclosure also encompasses a laminate including at least the mold release film and an ion exchange layer layered on a mold release layer of the mold release film. The mold release layer contains an ion exchange resin.

The ion exchange resin may be a fluororesin having a sulfonic acid group or a salt thereof in a side chain of the fluororesin, and the ion exchange layer may be an electrolyte membrane and/or an electrode membrane. The ion exchange resin may have an equivalent weight of 1000 g/mol or less [e.g., 1000 g/mol (SO₃H) or less]. A release force when the mold release film and the ion exchange layer are released from each other is approximately 100 mN/25 mm or less.

Further, the present disclosure encompasses a method for producing a membrane electrode assembly of a solid polymer type fuel cell, the method including releasing the mold release film from the laminate.

The production method further includes at least heating at a temperature from 140 to 180°C before the releasing.

### Advantageous Effects of Invention

In the present disclosure, a specific mold release film including a mold release layer containing at least a polypropylene-based resin is formed, and thus it is possible to provide a mold release film having excellent handleability (heat resistance or thermal shrinkage resistance) and mold releasability even when used in a high-temperature environment. Therefore, the mold release film has moderate mold releasability while effectively suppressing curling, wrinkles, and the like due to thermal shrinkage. In addition, even when the ion exchange layer containing an ion exchange resin is formed, layered, or transferred under a high-temperature environment, the mold release film has moderate or good mold releasability, and can be easily or efficiently released in a necessary step or stage while securing predetermined steady contact between the mold release layer and the ion exchange layer (and the substrate layer). Furthermore, the mold release film can ensure moderate mold releasability even with respect to an ion exchange layer containing an ion exchange resin having a low equivalent weight (or a high ion exchange capacity). Therefore, productivity of an electrolyte membrane and/or an electrode membrane for a solid polymer type fuel cell, and a membrane electrode assembly (MEA) including these can be effectively improved.

### Description of Embodiments

### Mold Release Film

The mold release film of the present disclosure includes at least a mold release layer containing a polypropylene-based resin, and may further include a substrate layer as necessary. Therefore, the mold release film may be a single-layer film (non-laminate film) formed of the mold release layer alone; or may be a mold release film including at least a substrate layer and the mold release layer directly or indirectly layered on at least one surface of the substrate layer. From the viewpoint of effectively improving handleability, a mold release film including a substrate layer and a mold release layer is preferable.

### Mold Release Layer (or Surface Layer)

The mold release layer is a layer forming at least one surface layer of the mold release film in order to support an object to be supported with moderate mold releasability, and contains at least a polypropylene-based resin.

### Polypropylene-Based Resin

The polypropylene-based resin may be a polymer mainly containing propylene (propylene unit), and a proportion of the propylene unit to all constituent units of the polypropylene-based resin may be selected from a range of, for example, approximately 1 mol% or greater (e.g., from 10 to 100 mol%), and may be, for example, approximately 30 mol% or greater (e.g., from 50 to 99 mol%), preferably 60 mol% or greater (e.g., from 70 to 98 mol%), and more preferably 80 mol% or greater (e.g., from 90 to 96 mol%), or may be 100 mol%. Therefore, the polypropylene-based resin may be a propylene homopolymer or a propylene copolymer.

Examples of a monomer copolymerizable (copolymerizable monomer) with propylene in the copolymer include α-olefins except propylene (α-C₃₋₂₀ olefins such as ethylene, 1-butene, 1-pentene, 3-methyl-1-butene, 1-hexene, 2-methyl-1-pentene, 3-methyl-1-pentene, 4-methyl-1-pentene, 1-heptene, 4,4-dimethyl-1-pentene, 3-ethyl-1-pentene, 4-methyl-1-hexene, 1-octene, 4,4-dimethyl-1-hexene, 3-ethyl-1-hexene, 4-ethyl-1-hexene, 1-nonene, 1-decene, 1-undecene, 1-dodecene, 1-tetradecene, 1-hexadecene, 1-octadecene, and 1-eicosene); diene-based monomers (for example, non-conjugated alkadienes such as 1,4-hexadiene, 1,7-octadiene, 4-methyl-1,4-hexadiene and 5-methyl-1,4-hexadiene, and conjugated alkadienes such as butadiene and isoprene); ethylenically unsaturated carboxylic acids or acid anhydrides thereof [(meth)acrylic acid, maleic acid, fumaric acid, itaconic acid, citraconic acid, crotonic acid, isocrotonic acid, mesaconic acid, angelic acid, and the like]; (meth)acrylic acid esters [(meth)acrylic acid alkyl esters such as methyl (meth)acrylate, ethyl (meth)acrylate, and butyl (meth)acrylate, (meth)acrylic acid hydroxyalkyl esters such as 2-hydroxyethyl (meth)acrylate, glycidyl (meth)acrylate, and the like]; vinyl cyanide monomers such as (meth)acrylonitrile; and vinyl ester-based monomers (saturated carboxylic acid vinyl esters such as vinyl acetate and vinyl propionate, and the like). Any one of these monomers may be used alone, or two or more thereof may be used in a combination. Among these monomers, α-olefins such as α-C₂₋₁₀ olefins (for example, α-C₂₋₆ olefins such as ethylene and 1-butene) are frequently used.

Examples of the form of the copolymer include block copolymerization, random copolymerization, alternating copolymerization, and graft copolymerization. Among these, the random copolymerization and the alternating copolymerization are usually used in many cases.

In the polypropylene-based resin, the ratio (molar ratio) of the propylene (propylene unit) to the copolymerizable monomer (copolymerizable monomer unit), (propylene/copolymerizable monomer), may be, for example, 90/10 to 100/0, preferably 95/5 to 100/0, more preferably about 99/1 to 100/0.

The polypropylene-based resin may be an atactic polymer, but from the viewpoint of improving heat resistance, a structure having tacticity such as an isotactic polymer and a syndiotactic polymer is preferable, and an isotactic polymer is particularly preferable.

In addition, the polypropylene-based resin may be a polymer formed using a Ziegler catalyst or the like, or may be a metallocene-based resin formed using a metallocene catalyst from the viewpoint of producing a polymer with a narrow molecular weight distribution and suppressing stickiness (bleeding-out) and blocking due to a low molecular weight component (tack component).

A number average molecular weight of the polypropylene-based resin may be, for example, approximately from 10000 to 500000, preferably from 15000 to 300000, and more preferably from 20000 to 100000.

In the present specification and claims, the number average molecular weight of the polypropylene-based resin may be a value measured by universal calibration using polystyrene as a standard at a measurement temperature of 140°C and using ortho-dichlorobenzene as a solvent and a column (Shodex GPC AD-806MS) in the GPC method.

A melting point (or softening point) of the polypropylene-based resin may be selected from a range of, for example, approximately from 110 to 350°C (e.g., from 120 to 200°C), and may be, for example, approximately 130°C or more (e.g., from 140 to 190°C), preferably from 150 to 185°C (e.g., from 155 to 180°C), and more preferably from 160 to 175°C (e.g., from 165 to 170°C). If the melting point is too low, the mold releasability, mechanical strength and the like may decrease when it is used in a high-temperature environment, and if the melting point is too high, production may become difficult.

In the present specification and claims, the melting point of the polypropylene-based resin can be measured based on a melting peak temperature (peak top temperature) by a differential scanning calorimeter DSC.

The resin (or polymer) component in the mold release layer may be only a polypropylene-based resin, or may further contain another resin (polymer) component different from the polypropylene-based resin to form a polymer blend or a polymer alloy. Examples of the other resin (polymer) component include polyolefin-based resins other than the polypropylene-based resin (for example, linear polyolefin-based resins such as polyethylene-based resins, and cyclic olefin-based resins); thermoplastic resins such as styrene-based resins, petroleum resins, chlorine-containing resins, polyamide-based resins, and polyphenylene ether-based resins; and olefin-based rubbers [for example, ethylene propylene rubber (EPM) and ethylene propylene diene rubber (EPDM)]. Any one of these resin components may be used alone, or two or more thereof may be used in combination.

A proportion of a total amount of the resin (polymer) components (total amount of the polypropylene-based resin and the other resin (polymer) component) in the mold release layer may be, for example, approximately 50 mass% or greater (e.g., from 60 to 100 mass%), preferably 70 mass% or greater (e.g., from 80 to 98 mass%), and more preferably 90 mass% or greater (e.g., from 90 to 96 mass%) with respect to the entire mold release layer, or may be substantially 100 mass% (only the resin (polymer) components).

A proportion of the polypropylene-based resin in the mold release layer may be selected from a range of, for example, approximately 1 mass% or greater (e.g., from 10 to 100 mass%), and may be, for example, approximately 30 mass% or greater (e.g., from 50 to 99 mass%), preferably 60 mass% or greater (e.g., from 70 to 98 mass%), and more preferably 80 mass% or greater (e.g., from 90 to 96 mass%) with respect to the entire resin (or polymer) component in the mold release layer with respect to the entire resin (or polymer) components in the mold release layer, or may be substantially 100 mass% (only the polypropylene-based resin). The proportion may be a proportion of the polypropylene-based resin to the entire mold release layer. If the proportion of the polypropylene-based resin is too low, the mold releasability may be impaired.

The mold release layer may further contain a commonly used additive. Examples of the commonly used additive include fillers, lubricants (e.g., wax, fatty acid ester, and fatty acid amide), antistatic agents, surfactants, stabilizers (e.g., antioxidants, heat stabilizers, and light stabilizers), flame retardants, viscosity modifiers, thickeners, and defoaming agents. Furthermore, as long as surface smoothness is not impaired, the mold release layer may contain organic or inorganic particles (particularly, an antiblocking agent such as zeolite). Any one of these additives may be used alone, or two or more thereof may be used in combination.

A total proportion of the additives may be, for example, approximately 50 parts by mass or less, preferably 30 parts by mass or less (e.g., from 0.01 to 20 parts by mass), and more preferably 10 parts by mass or less (e.g., from 0.1 to 5 parts by mass) with respect to 100 parts by mass of the total amount of the resin (or polymer) components in the mold release layer.

The mold release layer may be formed of a polypropylene-based resin film containing a polypropylene-based resin and, if necessary, another resin component, additive or the like. Such a polypropylene-based resin film may be a stretched film (or OPP) such as a biaxially stretched film, or may be a non-stretched (or unstretched) film (cast film or CPP). Any one of these films may be used alone, or two or more thereof may be used in combination.

When the polypropylene-based resin film is a biaxially stretched film (OPP), the film may be a sequentially biaxially stretched film or a simultaneously biaxially stretched film. When the polypropylene-based resin film is a stretched film, a stretch ratio thereof may be, for example, 1.5 times or more (e.g., from 1.5 to 6 times), and may be preferably from 2 to 5 times, and more preferably approximately from 3 to 4 times, in longitudinal and transvers directions. If the stretch ratio is too high, the mold releasability may not be sufficiently improved or the film thickness may become uneven.

Among these polypropylene-based resin films, a non-stretched film (CPP) is preferable from the viewpoint of not only being able to more effectively suppress thermal shrinkage (or occurrence of curling, wrinkling, and releasing of the object to be supported due to thermal shrinkage) and being particularly excellent in handleability in a high-temperature environment but also being able to further improve mold releasability with respect to the object to be supported (particularly, the ion exchange layer or the like). Although CPP is generally known to have higher heat-sealability (thermo-weldability or thermo-bondability) than OPP, it surprisingly appears to exhibit better mold releasability than OPP in high-temperature environments.

As the mold release layer (or polypropylene-based resin film), for example, commercially available products such as "FHK2" available from Futamura Chemical Co., Ltd., "FI-K" available from Futamura Chemical Co., Ltd., "FOR" available from Futamura Chemical Co., Ltd., and "Torayfan (trade name) 2500" available from Toray Industries, Inc. may be used.

When the mold release film includes a substrate layer, the mold release layer (or surface layer) may be formed on an outermost surface on at least one surface side of the substrate layer, may be formed on one surface side of the substrate layer, or may be formed on both surface sides of the substrate layer. In the present specification and claims, the "surface layer" of the mold release film means an outermost layer on at least one surface side regardless of whether the surface is a front surface or a back surface of the mold release film.

When the mold release layer is formed on both surface sides of the substrate layer, the two mold release layers (particularly, polypropylene-based resin films) may be different in type from each other, but are preferably of the same type or the same line (are particularly preferably same). In the mold release film of such an aspect (for example, mold release film in which OPP as a mold release layer is layered on both surface sides of the substrate layer), curling due to thermal shrinkage can be effectively reduced.

In addition, an aspect in which the mold release layer is formed on one surface side of the substrate layer is preferable in that the thickness of the mold release film can be easily reduced and the productivity can be more effectively improved by a roll-to-roll method or the like.

The average thickness of the mold release layer (in an aspect in which two mold release layers are provided, the average thickness of each mold release layer) may be selected from a range of, for example, approximately from 0.01 to 500 µm (e.g., from 1 to 100 µm). When the mold release film includes a substrate layer, the average thickness may be, for example, approximately from 1 to 80 µm (e.g., from 2 to 50 µm), preferably from 3 to 45 µm (e.g., from 5 to 40 µm), more preferably from 8 to 35 µm (e.g., from 10 to 30 µm), and particularly from 15 to 25 µm. When the mold release film does not include any substrate layer (or is formed by the mold release layer alone), the average thickness may be, for example, approximately from 1 to 80 µm (e.g., from 10 to 70 µm), preferably from 20 to 60 µm (e.g., from 25 to 55 µm), more preferably from 30 to 50 µm (e.g., from 35 to 45 µm), and particularly 40 µm or less. A thin mold release layer enables an effective reduction in thermal shrinkage, improves handleability, facilitates application to the roll-to-roll method or the like, and also improves economic efficiency. On the other hand, too thin a mold release layer may not effectively reduce the thermal shrinkage and cause a reduction in mechanical strength to lower the handleability (for example, wrinkles are likely to be formed).

The average thickness may be an average thickness of the polypropylene-based resin film before layering. When the mold release layer is formed as a coating film, the average thickness may be calculated based on the coated amount (dry applied amount or solid content weight per unit area) and density of the mold release layer.

The surface of the mold release layer may be subjected to a surface treatment (a commonly used surface treatment, for example, a corona discharge treatment, a flame treatment, a plasma treatment, a surface oxidation treatment such as an ozone or ultraviolet irradiation treatment, or a surface roughening treatment such as a blast treatment) as necessary in order to improve steady contact with the substrate layer, the intermediate layer (adhesive layer), or the like.

The mold release layer may have a smooth surface by coating or the like, and for example, arithmetic average roughness (Ra) in accordance with JIS B 0610 of the surface may be approximately 1 µm or less (e.g., 1 nm to 1 µm) and, for example, approximately from 1 to 800 nm, preferably from 1 to 500 nm, and more preferably from 1 to 300 nm (particularly, from 1 to 200 nm). When Ra is too large, there is a possibility that moderate mold releasability with respect to the object to be supported (such as an ion exchange layer) may not be achieved.

### Substrate Layer (or Surface Layer)

Since the mold release film may be formed by the mold release layer alone, the substrate layer is not necessarily required. However, the mold release film preferably includes the substrate layer from the viewpoint that thermal shrinkage (or curling, wrinkling, releasing, and the like associated therewith) is easily suppressed and handleability (or dimensional stability) can be effectively improved. In addition, in the mold release film in a layered form including such a substrate layer, even when tension acts in the roll-to-roll method (for example, even when tension acts in a high-temperature environment), elongation (or releasing associated therewith) of the mold release film is easily suppressed.

The substrate layer preferably contains a highly heat-resistant and dimensionally stable material (or heat-resistant substrate) such as a metal and/or a resin (synthetic resin). To be specific, the substrate layer may be formed of a synthetic resin or a metal having an elastic modulus of from 100 to 1000 MPa at 150°C. The elastic modulus is, for example, approximately from 120 to 1000 MPa, preferably from 150 to 1000 MPa, and more preferably from 200 to 1000 MPa. When the elastic modulus is too small, dimensional stability of the mold release film decreases, and releasing between the mold release layer and the object to be supported (for example, ion exchange layer) may occur in production by a roll-to-roll method, and, for example, productivity of a fuel cell may decrease.

Examples of the metal include aluminum, copper, iron, and alloys containing these metals (e.g., stainless steel). Any one of these metals may be used alone, or two or more thereof may be used in combination. The metal may be in the form of particles or the like (for example, in the form of a filler contained in a resin), but is preferably in the form of a film (sheet) or a foil.

As such a resin (synthetic resin), for example, various thermoplastic resins and thermosetting resins can be used, and from the perspective of achieving flexibility that allows production by a roll-to-roll method, thermoplastic resins are preferred. Examples of the thermoplastic resin include polyolefin-based resins except the polypropylene-based resin (such as cyclic polyolefin-based resins), polyvinyl alcohol-based resins, polyester-based resins, polycarbonate-based resins, polyamide-based resins, polyimide-based resins (such as thermoplastic polyimide, polyetherimide, and polyamideimide), polyphenylene ether-based resins, polyphenylene sulfide-based resins, and cellulose derivatives (such as cellulose esters such as cellulose acetate). Any one of these thermoplastic resins may be used alone or two or more thereof may be used in combination. The synthetic resin is preferably in the form of a film (sheet).

The substrate layer preferably contains at least a resin, more preferably contains at least one selected from the group consisting of a polyolefin-based resin, a polyvinyl alcohol-based resin, a polyester-based resin (such as a polyalkylene arylate-based resin), a polyamide-based resin, a polyimide-based resin, and a cellulose derivative, and is particularly preferably a polyester-based resin from the viewpoint of excellent balance between heat resistance and flexibility.

The polyester-based resin is preferably a polyalkylene arylate-based resin. The polyalkylene arylate-based resin includes a homopolyester or copolyester containing an alkylene arylate unit as a main component in a proportion of, for example, approximately 50 mol% or greater, preferably from 75 to 100 mol%, and more preferably from 80 to 100 mol% (in particular, from 90 to 100 mol%) with respect to the all constituent units of the polyalkylene arylate-based resin.

Examples of copolymerizable monomers forming the copolyester includes a dicarboxylic acid component (for example, a C₈₋₂₀ aromatic dicarboxylic acid such as terephthalic acid, isophthalic acid, 2,7-naphthalene dicarboxylic acid, 2,6-naphthalene dicarboxylic acid, or 2,5-naphthalene dicarboxylic acid; a C₄₋₁₂ alkane dicarboxylic acid such as adipic acid, azelaic acid, or sebacic acid; and a C₄₋₁₂ cycloalkane dicarboxylic acid such as 1,4-cyclohexane dicarboxylic acid), a diol component (for example, a C₂₋₁₀ alkanediol such as ethylene glycol, propylene glycol, butanediol or neopentyl glycol, a poly C₂₋₄ alkylene glycol such as diethylene glycol or polyethylene glycol, bis(hydroxy C₁₋₄ alkyl) C₄₋₁₂ cycloalkane such as 1,4-cyclohexane dimethanol, or an aromatic diol such as bisphenol A), and a hydroxycarboxylic acid component (such as p-hydroxybenzoic acid and p-hydroxyethoxybenzoic acid). Any one of these copolymerizable monomers may be used alone or in a combination of two or more.

Examples of the polyalkylene arylate-based resins include poly C₂₋₄ alkylene-C₈₋₁₂ arylate-based resins such as polyethylene terephthalate (PET), polytrimethylene terephthalate, polybutylene terephthalate, polyethylene naphthalate (PEN), polytrimethylene naphthalate, and polybutylene naphthalate. Any one of these polyalkylene arylate-based resins may be used alone or two or more thereof may be used in combination.

Among these polyalkylene arylate-based resins, polyethylene arylate-based resins such as polyethylene terephthalate (PET) and polyethylene naphthalate (PEN) (preferably ethylene naphthalate-based resins from the viewpoint of handleability), in particular, homopolyesters of ethylene arylate units (particularly ethylene naphthalate units from the viewpoint of handleability) or co-polyesters containing ethylene arylate units are exemplified from the viewpoint of high dimensional stability after stretching.

The copolymerizable monomer forming the copolyester containing an ethylene arylate unit includes the above-described dicarboxylic acid components, diol components, and hydroxycarboxylic acid components, and usually, a dicarboxylic acid component such as isophthalic acid.

A number average molecular weight of the polyester-based resin may be selected from a range of, for example, approximately from 5000 to 1000000 in terms of polystyrene standard by gel permeation chromatography (GPC), and may be, for example, approximately from 10000 to 500000, preferably from 12000 to 300000, and more preferably from 15000 to 100000.

When the substrate layer contains a resin, the proportion of the polyester-based resin may be, for example, 50 mass% or greater, preferably 80 mass% or greater, and more preferably 90 mass% or greater (for example, from 95 to 100 mass%) with respect to the entire synthetic resin in the substrate layer. When the substrate layer contains a polyester-based resin (particularly a polyalkylene arylate-based resin), a proportion of the polyester-based resin may be, for example, 50 mass% or greater, preferably 80 mass% or greater, and more preferably 90 mass% or greater (for example, from 95 to 100 mass%) with respect to the entire synthetic resin in the substrate layer. A proportion of the resin in the substrate layer may be, for example, 80 mass% or greater, preferably 90 mass% or greater, and more preferably 95 mass% or greater (e.g., from 95 to 100 mass%) with respect to the entire substrate layer.

The substrate layer may contain the additives exemplified in the above section "Mold Release Layer". The total proportion of the additives is, for example, approximately 50 parts by mass or less, preferably 30 parts by mass or less (e.g., from 0.01 to 20 parts by mass), and more preferably 10 parts by mass or less (e.g., from 0.1 to 5 parts by mass) with respect to 100 parts by mass of the resin in the substrate layer.

The substrate layer may be an unstretched film formed of a metal and/or a resin, or may be formed of a stretched film from the viewpoint of improving the mechanical strength of the film (particularly, the resin film). The stretched film may be a uniaxially stretched film, but is preferably a biaxially stretched film from the viewpoint of improving the mechanical strength. Further, the biaxially stretched film may be sequentially biaxially stretched, or may be simultaneously biaxially stretched from the viewpoint of excellent surface smoothness.

The stretch ratio of the stretched film may be, for example, 1.5 times or more (e.g., from 1.5 to 6 times), or may be preferably from 2 to 5 times, and more preferably approximately from 3 to 4 times. If the stretch ratio is too low, the production of the stretched film itself may become difficult and the mechanical strength may become insufficient, while, if it is too high, the film thickness may become uneven.

As the substrate layer (for example, polyester-based resin film), for example, a commercially available product such as "COSMOSHINE (trade name) A4160" available from Toyobo Co., Ltd., "TEONEX (trade name) Q51" available from Toyobo Co., Ltd., or "DIAFOIL (trade name) T100" available from Mitsubishi Chemical Corporation may be used.

The average thickness of the substrate layer may be selected from a range of, for example, approximately from 1 to 1000 µm (e.g., from 5 to 500 µm), and may be, for example, approximately from 10 to 300 µm (e.g., from 20 to 200 µm), preferably from 25 to 100 µm (e.g., from 30 to 80 µm), and more preferably from 35 to 70 µm (e.g., from 40 to 60 µm). If the thickness of the substrate layer is too large, it is difficult to produce the substrate layer by the roll-to-roll method, and, if the thickness is too small, dimensional stability may be lowered and thermal shrinkage may not be able to be effectively suppressed, or mechanical strength may be lowered and wrinkles or the like may be formed, or the conveyability by the roll-to-roll method may be lowered.

The average thickness may be an average thickness of the substrate layer (for example, polyester-based resin film such as a polyalkylene arylate-based resin film) before layering.

A thickness ratio of the mold release layer to the substrate layer (mold release layer/substrate layer) (average thickness ratio; in an aspect in which two mold release layers are provided, average thickness ratio of one mold release layer to the substrate layer) may be selected from a range of, for example, approximately from 1/0.1 to 1/10 (e.g., from 1/0.5 to 1/7), and may be, for example, approximately from 1/1 to 1/5, preferably from 1/1.3 to 1/4.5 (e.g., from 1/1.5 to 1/4), more preferably from 1/1.8 to 1/3.5 (e.g., from 1/2 to 1/3), and particularly preferably from 1/2.2 to 1/2.8 (e.g., from 1/2.3 to 1/2.7). If the thickness of the substrate layer is too large, it is difficult to produce the substrate layer by the roll-to-roll method, and, if the thickness is too small, dimensional stability may be lowered and thermal shrinkage may not be able to be effectively suppressed, or mechanical strength may be lowered and wrinkles or the like may be formed, or the conveyability by the roll-to-roll method may be lowered.

The surface of the substrate layer may be subjected to a surface treatment (a commonly used surface treatment, for example, a corona discharge treatment, a flame treatment, a plasma treatment, a surface oxidation treatment such as an ozone or ultraviolet irradiation treatment, or a surface roughening treatment such as a blast treatment) as necessary in order to improve steady contact with the substrate layer, the intermediate layer (adhesive layer), or the like.

Surface smoothness of the substrate layer may be surface smoothness which allows formation of the mold release layer or an intermediate layer by coating, bonding, co-extrusion, or the like, and, for example, an arithmetic average roughness Ra in accordance with JIS B 0601 may be 1 µm or less, and preferably approximately 100 nm or less (e.g., from 10 to 100 nm). In a case where the mold release layer is thin (for example, in a case where the mold release layer is produced by coating), since the uneven shape of the surface of the substrate layer easily follows the mold release layer, the surface of the substrate layer preferably also has moderate surface smoothness. The Ra of the substrate layer may be selected from a range of approximately from 1 to 50 nm, for example, approximately from 10 to 40 nm, preferably from 15 to 35 nm, and more preferably from 20 to 30 nm (particularly from 20 to 25 nm). If the Ra is too small, the steady contact between the substrate layer and the mold release layer tends to decrease, and the use in production by the roll-to-roll system becomes difficult. On the other hand, if the Ra is too large, the surface smoothness of the mold release layer may decrease.

### Intermediate Layer (or Adhesive Layer)

The mold release film may not include an intermediate layer (adhesive layer) interposed between the substrate layer and the resin layer, but preferably includes the intermediate layer. When the intermediate layer is interposed, both the mold releasability by the mold release layer and the stability of the mold release film itself (steady contact between the substrate layer and the mold release layer) can be easily achieved.

The intermediate layer (adhesive layer) may be formed of a commonly used adhesive (for example, a urethane-based adhesive, an acrylic-based adhesive, a polyester-based adhesive, or a polyamide-based adhesive), a pressure-sensitive adhesive (for example, a rubber-based pressure-sensitive adhesive, an acrylic pressure-sensitive adhesive, an olefin-based pressure-sensitive adhesive, or a silicone-based pressure-sensitive adhesive), or the like. For example, in a case where the substrate layer is a polyester-based resin, the intermediate layer may be an adhesive layer (easily adhesive layer) which is formed by an adhesive resin such as a low molecular weight polyester-based resin, an aliphatic polyester resin, or an amorphous polyester resin. Any one of these adhesives or pressure-sensitive adhesives may be used alone, or two or more thereof may be used in combination. Among them, a urethane-based adhesive is preferable.

As the adhesive or pressure-sensitive adhesive for forming the intermediate layer (adhesive layer), for example, a commercially available product such as "TM-570V" available from Toyo-Morton, Ltd. or "TM-7011" available from Toyo-Morton, Ltd. may be used.

An average thickness of the intermediate layer (adhesive layer) may be, for example, approximately from 0.01 to 40 µm, preferably from 0.05 to 20 µm, more preferably from 0.1 to 10 µm (e.g., from 0.5 to 5 µm), and particularly from 1 to 3 µm. If the intermediate layer is too thin, the steady contact between the mold release layer and the substrate layer may not be able to be sufficiently improved. If the intermediate layer is too thick, the steady contact between the mold release layer and the substrate layer may not be able to be sufficiently improved, the mechanical strength may decrease, and production by the roll-to-roll method may become difficult.

A thickness ratio between the mold release layer and the intermediate layer (mold release layer/intermediate layer) (average thickness ratio; in an aspect in which two mold release layers are provided, average thickness ratio of one mold release layer to the intermediate layer) may be selected from a range of, for example, approximately from 2/1 to 100/1, and may be, for example, approximately from 3/1 to 50/1, preferably from 4/1 to 40/1, and more preferably from 5/1 to 20/1. If the intermediate layer is too thin, the steady contact between the mold release layer and the substrate layer may not be able to be sufficiently improved. If the intermediate layer is too thick, the steady contact between the mold release layer and the substrate layer cannot be sufficiently improved, the mechanical strength may decrease, and production by the roll-to-roll method may become difficult.

Note that the mold release film may or may not include one or more other layers (functional layers) (for example, a resin layer) as long as the effects of the present disclosure are not impaired. When the mold release film includes any other layer, the other layer may be layered with or without an adhesive layer interposed therebetween. The adhesive layer for bonding the other layer may be formed of an adhesive component different from that of the intermediate layer, or may be formed of the same adhesive component or the same type of adhesive component.

### Properties of Mold Release Film and Production Method

The mold release film of the present disclosure exhibits high dimensional stability and has excellent handleability, even when exposed to a high-temperature environment. Therefore, a dimensional change rate (thermal dimensional change rate or thermal shrinkage rate when the mold release film is subjected to a heating treatment at 160°C for 15 minutes) of the mold release film may be selected from a range of, for example, approximately 5% or less (e.g., 4.5% or less), may be preferably approximately 4% or less (e.g., 4.0% or less, and preferably 3.5% or less), is preferably approximately 3% or less (e.g., 2.5% or less) from the viewpoint of more effectively suppressing curling and wrinkling, releasing associated therewith, and the like, and may be more preferably approximately 2% or less (e.g., from 0 to 1.8%), even more preferably 1.5% or less (e.g., from 0.1 to 1.2%), and particularly 1% or less (e.g., from 0.2 to 1%). The dimensional change rate may be a dimensional change rate of the mold release layer alone (polypropylene-based resin film alone). If the dimensional change rate of the mold release film is too large, curling, wrinkling, releasing, and the like are likely to occur due to thermal shrinkage, and the mold release film may not be able to be used under high-temperature conditions.

In the present specification and claims, the dimensional change rate of the mold release film (thermal dimensional change rate or thermal shrinkage rate when the mold release film is subjected to a heating treatment under the conditions of 160°C and 15 minutes) can be measured by the method which will be described in Examples below.

As a method for producing the mold release film, a commonly used method may be used and may be appropriately selected depending on the form of the mold release film. When the mold release film is formed of a single mold release layer, for example, a film produced by a commonly used film-forming method such as a melt extrusion method, a casting method, or a calender method may be used as the mold release film with or without stretching. In the case of a laminate including a substrate layer, for example, a method such as coating, co-extrusion or extrusion lamination, thermocompression bonding, or dry layering may be used, and layering may be performed via an intermediate layer (pressure-sensitive adhesive or adhesive). Among them, dry lamination is preferable. A preferable example includes dry lamination between the substrate layer (such as a polyester-based resin film produced by a commonly used film-forming method) and the mold release layer (polypropylene-based resin film produced by a commonly used film-forming method, particularly CPP or the like) [that is, formation of a mold release film in which a substrate layer, an intermediate layer (adhesive layer) and a mold release layer are layered in this order] using an adhesive or a pressure-sensitive adhesive.

In addition, each layer (for example, the mold release layer, the intermediate layer, and the like) may be formed by coating as necessary from the viewpoint that the layer can be formed into a thin layer with high smoothness. The coating method may be a commonly used method, and examples thereof include a coating method exemplified in the ion exchange layer formation in the sections "Method for Producing Laminate" and "Method for Producing MEA" which will be given below.

When each layer is produced by coating, a solvent or dispersion medium used in a coating liquid may be appropriately selected, and examples thereof include aromatic hydrocarbons (benzene, toluene, xylene, and the like), alicyclic hydrocarbons (cyclohexane, cyclohexanone, cyclohexene, and the like), halogenated hydrocarbons (dichloromethane, dichloroethane, and the like), cyclic amides (N-methyl-2-pyrrolidone and the like), and cyclic ethers (dioxane and the like). Any one of these solvents or dispersion media may be used alone, or two or more thereof may be used in combination.

### Laminate (or Composite)

The mold release film of the present disclosure may form a laminate (composite) by supporting or layering an object to be supported on the mold release layer. The object to be supported can be set according to the application or the like and is not particularly limited, and the shape thereof may be a three dimensional shape (complex shape), but is preferably a planar shape (for example, a rectangular parallelepiped shape or a cylindrical shape) in at least a partial region for contact with the mold release layer, and more preferably a two dimensional shape (for example, a polymer layer) such as a sheet shape, a film shape, or a foil shape.

In addition, the object to be supported may be a transfer material (transfer medium) for transfer to a receiver substrate (a receiver film or the like), and is layered with the mold release film of the present disclosure, and thus allows easy or efficient transfer while suppressing breakage of the object to be supported (while preventing a part or all of the object to be supported from remaining on the mold release film). In addition, since the stability of the mold release film itself (for example, steady contact between the mold release layer and the substrate layer) is high, a part of the mold release film (for example, a part of the mold release layer) hardly remains on the transfer material side.

When the object to be supported is a polymer layer, the polymer layer may be a resin film formed in advance before layering, or may be a polymer layer formed by applying a desired coating liquid onto the mold release layer of the mold release film.

Such a polymer layer may be an ion exchange layer (or an ion exchange resin-containing layer) containing an ion exchange resin (preferably an ion exchange resin having high proton conductivity with a high concentration of an acidic group such as a sulfonic acid group). Therefore, the mold release film of the present disclosure is preferably a mold release film for the ion exchange layer (particularly, a mold release film for transferring the ion exchange layer as a transfer material to a receiver substrate, for example, a mold release film for producing a membrane electrode assembly of a solid polymer type fuel cell). The laminate of the present disclosure is preferably a laminate including at least the mold release film and an ion exchange layer layered on a mold release layer of the mold release film, the ion exchange layer containing an ion exchange resin. In the laminate, the mold release film has only to be in contact with at least a partial region of the ion exchange layer, and may cover the entire surface (or both surfaces) thereof.

### Ion exchange Layer (Ion Exchange Resin-Containing Layer)

The laminate of the present disclosure may include an ion exchange layer (ion exchange resin-containing layer) directly layered on the mold release layer of the mold release film and containing at least an ion exchange resin.

Examples of the ion exchange resin include a commonly used ion exchange resin utilized for a fuel cell (such as a solid polymer type fuel cell). A cation exchange resin such as a strongly acidic cation exchange resin or a slightly acidic cation exchange resin is preferred, and examples thereof include an ion exchange resin containing an acidic group, for example, a sulfonic acid group, a carboxyl group, a phosphoric acid group, a phosphonic acid group, or salts thereof (in detail, an ion exchange resin containing, as an electrolytic group having an electrolytic function, a sulfonic acid group, a carboxyl group, a phosphoric acid group, a phosphonic acid group, or salts thereof). An ion exchange resin containing a sulfonic acid group and/or salt thereof (an ion exchange resin containing a sulfonic acid group or salt thereof as an electrolytic group) is particularly preferred.

As the ion exchange resin containing a sulfonic acid group or a salt thereof, various resins containing a sulfonic acid group or salt thereof can be used. Examples of the various resins include polyolefins such as polyethylene and polypropylene, (meth)acrylic resins, styrene-based resins, polyacetal-based resins, polyester-based resins, polycarbonate-based resins, polyamide-based resins, polyimide-based resins (also including polyetherimide and polyamideimide), polyether-based resins, polyether ketone-based resins (polyether ketone, polyether ether ketone, and the like), polysulfone-based resins (polysulfone, polyethersulfone, and the like), polyphenylene sulfide-based resins, and fluororesins.

Among the ion exchange resin containing a sulfonic acid group or salt thereof, for example, a fluororesin containing a sulfonic acid group or salt thereof and a sulfonated product of a crosslinked polystyrene are preferred, and a polystyrene-graft-polyethylene tetrafluoroethylene copolymer or polystyrene-graft-polytetrafluoroethylene copolymer containing a sulfonic acid group or salt thereof may be employed. Among these, for example, from the perspective of mold releasability, a fluororesin containing a sulfonic acid group or salt thereof (e.g., fluorohydrocarbon resin with at least some hydrogen atoms being replaced with fluorine atoms, particularly perfluoropolymer with all hydrogen atoms being replaced with fluorine atoms) is particularly preferred. In particular, a fluororesin having a sulfonic acid group or a salt thereof in a side chain of the fluororesin (for example, a fluororesin having a sulfonic acid group-containing perfluoro group such as - CF₂CF₂SO₃H group or -OCF₂CF₂SO₃H group in a side chain of the fluororesin), for example, a copolymer of tetrafluoroethylene and sulfonyl fluoride vinyl ether [for example, perfluoro(3-oxa-4-pentenesulfonic acid fluoride) [CF₂=CF-OCF₂CF₂SO₂F] or a hydrolyzate thereof, a copolymer of tetrafluoroethylene and [2-(2-sulfotetrafluoroethoxy)hexafluoropropoxy]trifluoroethylene (for example, a block copolymer) or the like is preferably used.

The equivalent weight of the ion exchange resin may be, for example, 3000 g/mol or less (e.g., 2000 g/mol or less, preferably 1500 g/mol or less, and particularly 1000 g/mol or less), and is, for example, from 10 to 1000 g/mol, preferably from 100 to 900 g/mol, more preferably from 500 to 850 g/mol, even more preferably from 600 to 800 g/mol, and most preferably from 700 to 750 g/mol. The equivalent weight [in g/mol (or g/eq)] of the ion exchange resin may be an equivalent weight [g/mol (SO₃H)] of an ion exchange resin having a sulfonic acid group or a salt thereof. In particular, the mold release film of the present disclosure has moderate mold releasability even with respect to ion exchange layers containing ion exchange resins having an equivalent weight of 1000 g/mol or less (particularly 800 g/mol or less) and excellent proton conductivity [ion exchange resins having a high acidic group concentration (for example, a high sulfonic acid density)].

In the present specification and claims, the equivalent weight (EW) of the ion exchange resin is an index indicating an amount of ion exchange groups, and means a mass of a polymer required to provide 1 mol of exchangeable protons, and corresponds to a reciprocal of the ion exchange capacity. In the case of an ion exchange resin having a sulfonic acid group or a salt thereof, the equivalent weight refers to the number of grams of dry ion exchange resin per mole of the sulfonic acid group. The equivalent weight of the ion exchange resin can be measured by a commonly used method, for example, an acid-base titration method.

The ion exchange capacity of the ion exchange resin may be, for example, approximately 0.1 meq/g or more (e.g., approximately 0.2 meq/g or more), and may be, for example, approximately from 0.3 to 2 meq/g (e.g., from 0.5 to 1.8 meq/g), preferably from 0.8 to 1.7 meq/g (e.g., from 1 to 1.6 meq/g), and more preferably from 1.1 to 1.55 meq/g (e.g., from 1.2 to 1.5 meq/g, and particularly from 1.3 to 1.45 meq/g). In particular, the mold release film of the present disclosure has moderate mold releasability even with respect to ion exchange layers containing ion exchange resins having an ion exchange capacity of 0.95 meq/g or more (for example, 1 meq/g or more), and particularly 1.1 meq/g or more (for example, 1.2 meq/g or more) and excellent proton conductivity [ion exchange resins having a high acidic group concentration (for example, a high sulfonic acid density)].

The glass transition temperature of the ion exchange resin may be selected from a range of, for example, approximately from 100 to 200°C (e.g., from 110 to 190°C), and may be preferably approximately from 115 to 180°C (e.g., from 135 to 170°C), more preferably from 120 to 160°C (e.g., from 125 to 150°C), and particularly from 120 to 145°C (e.g., from 130 to 140°C).

As such an ion exchange resin, commercially available products such as "trade name: Aquivion" available from Solvay, "trade name: Nafion" available from DuPont, and the like can be used. Note that, as the ion exchange resin, for example, an ion exchange resin described in JP 2010-234570 A may be used.

The ion exchange layer may be, for example, an electrolyte membrane and/or an electrode membrane of a solid polymer type fuel cell, may be, for example, an electrolyte membrane formed of the ion exchange resin or an electrode membrane containing the ion exchange resin and catalyst particles, or may be a membrane electrode assembly (MEA) in which these membranes are layered.

In the electrode membrane (catalyst layer or electrode catalyst membrane), the catalyst particle contains a metallic component having a catalytic action (particularly, a pure noble metal such as platinum (Pt), or an alloy containing the noble metal). In an electrode membrane for a cathode, the catalyst particle preferably contains platinum, and, in an electrode membrane for an anode, the catalyst particle preferably contains a platinum-ruthenium alloy. Furthermore, the catalyst particle is preferably prepared as a composite particle having the metallic component supported on a conductive material (e.g., a carbon material such as carbon black). In the electrode membrane, a proportion of the ion exchange resin may be, for example, approximately from 5 to 300 parts by mass, preferably from 10 to 250 parts by mass, and more preferably from 20 to 200 parts by mass, with respect to 100 parts by mass of the catalyst particles.

The ion exchange layer may also contain, as necessary, additives exemplified in the section "Mold Release Layer". For example, the ion exchange resin-containing layer may contain an inorganic material such as an inorganic particle or an inorganic fiber (e.g., carbonaceous material, glass, and ceramics).

An average thickness of the ion exchange layer may be, for example, from 1 to 500 µm, preferably from 1.5 to 300 µm, and more preferably from 2 to 200 µm.

More specifically, an average thickness of the electrolyte membrane may be, for example, approximately from 1 to 500 µm (e.g., from 10 to 100 µm), preferably from 5 to 300 µm (e.g., from 10 to 50 µm), and more preferably from 10 to 200 µm (e.g., from 15 to 30 µm).

An average thickness of the electrode membrane may be, for example, approximately from 1 to 100 µm, preferably from 2 to 80 µm, and more preferably from 2 to 50 µm.

The ion exchange layer can be directly layered on the mold release layer of the mold release film to form the laminate. When the mold release layer is formed on both surfaces (outermost layers of both the front surface and the back surface) of the mold release film, the ion exchange layer has only to be formed on at least one surface of the mold release film, may be formed on both surfaces, or may be formed only on one surface.

The ion exchange resin generally has a unique structure having a main chain of a fluororesin having high mold releasability and a side chain containing an acidic group (functional group) such as a sulfonic acid group having low mold releasability. However, the laminate with the mold release film of the present disclosure has excellent mold releasability (which enables the mold release film to be easily released when necessary and to be prevented from being released when unnecessary) even when exposed to a high-temperature environment (for example, processed under a high-temperature condition) and even when the ion exchange resin has a high concentration of an acidic group (functional group) such as a sulfonic acid group.

Therefore, the release force [in mN/25 mm] when the mold release film and the ion exchange layer are released from each other may be, for example, approximately 120 or less (e.g., 110 or less), preferably 100 or less (e.g., from 1 to 80), more preferably 60 or less (e.g., from 3 to 50), even more preferably 40 or less (e.g., from 5 to 30), and particularly 25 or less (e.g., from 10 to 20, preferably from 15 to 20). The release force may be a release force of a laminate subjected to a heating treatment at 160°C for 30 minutes. If the release force is too large, mold releasing may become difficult (for example, the object to be supported such as the ion exchange layer and/or the mold release film may be broken at the time of releasing), and, if the release force is too small, the object to be supported may not be sufficiently supported and unintended releasing may occur.

Note that, in the present specification and claims, the release force when the mold release film and the ion exchange layer are released from each other can be measured by the method which will be described in the Examples below.

### Method for Producing Laminate (Ion Exchange Layer Formation)

The laminate of the present disclosure may be produced by contacting or layering the mold release layer of the mold release film and the object to be supported (for example, a polymer layer formed in advance). When the object to be supported is an ion exchange layer, the laminate may be prepared through the ion exchange layer formation in which the ion exchange layer is formed (or layered) on the mold release layer of the mold release film. In the ion exchange layer formation, a method of coating a liquid composition for an ion exchange layer is often used as a method for forming or layering an ion exchange layer.

The liquid composition for an ion exchange layer (coating agent for an ion exchange layer) has only to contain a component for forming the ion exchange layer described above (ion exchange resin, and, as necessary, catalyst particles), and may further contain a solvent (or dispersion medium).

Examples of the solvent (or dispersion medium) include water, alcohols (e.g., C₁₋₄ alkanol such as methanol, ethanol, isopropanol, and 1-butanol), ketones (e.g., acetone and methyl ethyl ketone), ethers (e.g., dioxane and tetrahydrofuran), and sulfoxides (e.g., dimethyl sulfoxide). Any one of these solvents may be used alone, or two or more thereof may be used in combination. Among these solvents, from the viewpoint of handleability and the like, water and a mixed solvent of water and C₁₋₄ alkanol (e.g., a mixed solvent of water and isopropanol) are frequently used. A concentration of the solute or solid content (ion exchange resin, catalyst particles, etc.) of the solution (or dispersion) is, for example, approximately from 1 to 80 mass%, preferably from 2 to 60 mass%, and more preferably from 3 to 50 mass% (e.g., from 10 to 30 mass%).

Examples of the coating method include commonly used methods such as a roll coater method, an air knife coater method, a blade coater method, a rod coater method, a reverse coater method, a bar coater method, a comma coater method, a die coater method, a gravure coater method, a screen coater method, a spray method, and a spinner method. Among these methods, the blade coater method, the bar coater method and the like are frequently used. Among these methods, the blade coater method, the bar coater method and the like are preferably used.

Alternatively, an ion exchange layer (or a laminate) may be formed by coating a liquid composition for an ion exchange layer containing an ion exchange resin (and, if necessary, catalyst particles or the like) and then evaporating and drying the solvent (or dispersion medium). A drying method is not particularly limited, and may be natural drying. However, from the viewpoint of productivity, drying is preferably performed by a heating treatment (drying treatment). The heating treatment may be performed not only for drying but also for adjusting the mold releasability of the ion exchange layer. The heating treatment may be performed while the temperature is changed stepwise (e.g., the temperature is increased stepwise). A heating temperature in the heating treatment (maximum temperature when the temperature is changed stepwise) may be selected from a range of, for example, approximately from 50 to 230°C (e.g., from 100 to 200°C), and may be, for example, approximately from 130 to 190°C, preferably from 140 to 180°C (e.g., from 150 to 175°C), and more preferably from 155 to 170°C (e.g., from 160 to 165°C). If the heating temperature is too low, it may take a long time for drying and the ion exchange layer may not be formed efficiently and the solvent may remain and the performance may be lowered. If the heating temperature is too high, the ion exchange resin or the like may be decomposed, and mold releasing from the mold release film may become difficult. Furthermore, the heating time may be, for example, approximately from 1 to 600 minutes, preferably from 10 to 120 minutes (e.g., from 15 to 90 minutes), and more preferably from 20 to 60 minutes (e.g., from 25 to 40 minutes). If the heating time is too short, sufficient drying may not be achieved, and the solvent may remain and the performance may be lowered. If the heating time is too long, not only the ion exchange layer may not be able to be formed efficiently, but also the ion exchange resin or the like may be decomposed, and mold releasing from the mold release film may become difficult.

In the present disclosure, even in the laminate subjected to the heating treatment (drying treatment) in the ion exchange layer formation, the mold release film is excellent in handleability, and thus curling and wrinkling due to thermal shrinkage and releasing of the ion exchange layer associated therewith are effectively suppressed, and moderate mold releasability can be maintained.

### Method for Producing Membrane Electrode Assembly (MEA)

The mold release film (or laminate) of the present disclosure can be used as a mold release film for various objects to be supported. For example, it can be used not only as a mold release film for forming a polymer layer (ion exchange layer or the like) on a mold release layer by coating or the like, but also as a mold release film for transferring (layering) the formed (or layered) polymer layer as a transfer medium (transfer material) onto a receiver substrate (receiver film or the like). In particular, the laminate of the present disclosure can maintain moderate mold releasability with respect to the ion exchange layer even when exposed to high-temperature conditions, and can effectively suppress migration accompanied by breakage of the object to be supported or the mold release layer, and thus can be preferably used as a mold release film for producing a membrane electrode assembly (MEA) (for example, an MEA of a solid polymer type fuel cell or a hydrogen supply device).

### Bonding

When the laminate of the present disclosure is used in production of an MEA, for example, a first laminate in which an electrolyte membrane is layered (for example, layered by coating) on a mold release layer of a first mold release film may be produced; and a second laminate in which an electrode membrane is layered (for example, layered by coating) on a mold release layer of a second mold release film may be produced.

The produced laminates may each be subjected to bonding. In the bonding, a membrane electrode assembly is prepared by bonding the electrolyte membrane and the electrode membrane, which have been layered on the mold release layers of the first and second mold release films, respectively.

When the membrane electrode assembly is continuously produced, in the ion exchange layer formation in which each of the first and second laminates (the electrolyte membrane and the electrode membrane) is formed before the bonding, the laminate is conveyed to a place where the bonding is performed. In the present disclosure, the laminate is excellent in flexibility, layering involving such conveyance can be performed by a roll-to-roll method, and productivity can be improved. Furthermore, since the handleability (dimensional stability and the like) of the mold release film is also excellent, even when the mold release film is continuously produced by the roll-to-roll system, not only curling and wrinkles due to thermal shrinkage can be effectively suppressed, but also elongation of the mold release film due to tension is suppressed. Thus, the mold release films can be wound in a roll form without the ion exchange layer being released.

In the present specification and claims, the "roll-to-roll method" means a production method in which a predetermined treatment [for example, formation (coating or the like) or layering of a polymer layer (ion exchange layer or the like)] is continuously performed on a long film in a process of unwinding (rewinding) the long film wound in a roll shape.

In the bonding, the electrolyte membrane and the electrode membrane (the first and second laminates) are bonded to each other by a thermocompression bonding treatment (a heating treatment and a compression bonding treatment). From the viewpoint of improving production efficiency, the laminate may be subjected to a heating treatment in advance (preheating treatment) before pressurization (compression bonding).

A heating temperature (maximum temperature) when the preheating treatment is performed may be selected from a range of, for example, approximately from 80 to 250°C (e.g., from 100 to 200°C), and may be, for example, approximately from 130 to 190°C, preferably from 140 to 180°C (e.g., from 150 to 175°C), and more preferably from 155 to 170°C (e.g., from 160 to 165°C). If the heating temperature is too low, efficient production may not be able to be performed. If the heating temperature is too high, the ion exchange resin or the like may be decomposed, and mold releasing from the mold release film may become difficult. Furthermore, the heating time may be, for example, approximately from 10 to 600 minutes, preferably from 10 to 120 minutes (e.g., from 15 to 90 minutes), and more preferably from 20 to 60 minutes (e.g., from 25 to 40 minutes). If the heating time is too short, sufficient preheating may not be able to be performed. If the heating time is too long, not only efficient production cannot be performed, but also the ion exchange resin or the like may be decomposed, and mold releasing from the mold release film may become difficult.

A heating temperature in the thermocompression bonding treatment may be the same as the heating temperature for the preheating treatment including preferred aspects. If the heating temperature is too low, efficient production may not be able to be performed. If the heating temperature is too high, the ion exchange resin or the like may be decomposed, and mold releasing from the mold release film may become difficult. A pressure in the thermocompression bonding treatment may be selected from a range of, for example, approximately from 0.1 to 20 MPa (for example, from 0.5 to 10 MPa), and may be, for example, approximately from 1 to 5 MPa (for example, from 1.5 to 4.5 MPa), preferably from 2 to 4 MPa (for example, from 2.5 to 3.5 MPa). A compression bonding time in the thermocompression bonding treatment may be selected from a range of, for example, approximately from 0.1 to 30 minutes, and may be, for example, approximately from 1 to 10 minutes (e.g., from 2 to 8 minutes), and preferably from 3 to 7 minutes (e.g., from 4 to 6 minutes).

In the present disclosure, even in the laminate subjected to not only the heating treatment (drying treatment) in the ion exchange layer formation, but also the thermocompression bonding treatment and preheating treatment in the bonding, the mold release film is excellent in handleability, and thus curling and wrinkling due to thermal shrinkage and releasing of the ion exchange layer associated therewith are effectively suppressed, and moderate mold releasability can be maintained.

### Releasing

A composite of the first and second laminates bonded to each other in the bonding (a laminate in which the electrolyte layer and the electrode membrane are bonded to each other) is subjected to releasing of the mold release film. As described above, even if the laminate is exposed to high-temperature conditions before the releasing, curling and wrinkling due to thermal shrinkage and releasing associated therewith can be effectively suppressed, while moderate mold releasability can be maintained. Therefore, the laminate can be easily or efficiently released in the releasing. Therefore, in the present disclosure, even if at least the mold release film or the laminate is subjected to a heating treatment before the releasing [for example, even if the mold release film or the laminate is subjected to the heating treatment (drying treatment) in the ion exchange layer formation, the thermocompression bonding treatment and preheating treatment in the bonding, and the like], an MEA can be easily or efficiently produced.

In addition, even when the laminate is exposed to high-temperature conditions, breakage of the ion exchange layer and breakage of the mold release film (such as breakage of the mold release layer and releasing between the mold release layer and the substrate layer) and migration to the counterpart associated therewith can be effectively suppressed, and thus workability can be improved and an MEA can be produced easily or efficiently.

In the releasing, both or either one of the first and second mold release films may be released. For example, the first mold release film may be released from the composite of the first and second laminates produced in the bonding, and a third laminate (a laminate in which an electrode membrane is formed on a mold release layer of a third mold release film by the ion exchange layer formation) may be further layered (bonded) on the electrolyte membrane exposed by the releasing in the same manner as in the bonding, with the electrode membrane side of the third laminate facing the electrolyte membrane. When the electrode membrane of the second laminate is an electrode membrane for an anode electrode, the electrode membrane of the third laminate may be an electrode membrane for a cathode electrode. A membrane electrode assembly (MEA) may be produced by releasing the mold release film from the composite thus produced (a laminate including a laminate structure in which the electrode membranes of the second and third laminates are bonded to both surfaces of the electrolyte membrane of the first laminate) in the same manner as in the above-mentioned releasing, and layering a fuel gas supply layer and an air supply layer on each electrode membrane by a commonly used method.

Furthermore, as another aspect, by using the electrolyte membrane, the first laminate including the first electrode membrane and the second laminate including the second electrode membrane, an MEA in which the electrode membranes are layered on both surfaces of the electrolyte membrane may be produced by contacting (layering) the electrode membrane of each laminate with/on both surfaces of the electrolyte membrane, subjecting the layered product to the bonding, and then subjecting the product to the releasing to release the mold release film.

Each of the aspects disclosed herein may be combined with any other feature disclosed herein.

### Examples

Hereinafter, the present disclosure is described in greater detail based on examples, but the present disclosure is not limited to these examples.

### Used Raw Material

### Mold release layer

OPP1: biaxially stretched polypropylene film, "FOR" available from Futamura Chemical Co., Ltd., 12 µm thick, one side corona treated
OPP2: biaxially stretched polypropylene film, "FOR" available from Futamura Chemical Co., Ltd., 30 µm thick, one side corona treated
OPP3: biaxially stretched polypropylene film, "Torayfan (trade name) 2500" available from Toray Industries, Inc., 40 µm thick
CPP: non-stretched polypropylene film, "FHK2" available from Futamura Chemical Co., Ltd., 20 µm thick, one side corona treated
LLDPE: linear low-density polyethylene film, "LL-XHT" available from Futamura Chemical Co., Ltd., 25 µm thick
PTFE: polytetrafluoroethylene film, "NITOFLON UL900" available from Nitto Denko Corporation, 100 µm thick

### Substrate layer

PET: biaxially stretched polyethylene terephthalate film, "DIAFOIL (trade name) T100" available from Mitsubishi Chemical Corporation, 50 µm thick
PEN: biaxially stretched polyethylene naphthalate film, "TEONEX (trade name) Q51" available from Toyobo Co., Ltd., 50 µm thick

### Ion exchange layer 1

Ion exchange resin solution 1: "Aquivion (trade name) D72-25BS" available from Sigma Aldrich, equivalent weight: 720 ± 20 g/mol (SO₃H), solid content: 25 ± 1 mass%.

### Ion exchange layer 2

Ion exchange resin solution 2: "Nafion (trade name) DS2020CS" available from Du Pont, equivalent weight: 1100 ± 20 g/mol (SO₃H), solid content: 21 ± 1 mass%.

### Thermal Dimensional Change Rate (or Thermal Shrinkage Rate)

The mold release film was cut into a square of 10 cm × 10 cm (cut so that the flow direction and the width direction of the mold release film were the longitudinal direction and the transverse direction of the cut film, respectively), and heat treated in a hot air oven at 160°C for 15 minutes. After the heating treatment, the longitudinal and transverse dimensions of the sample film were measured, and the thermal shrinkage rate in each direction was determined according to the following equation. The measurement was performed five times, an average value of the thermal shrinkage rate in the longitudinal direction and an average value of the thermal shrinkage rate in the lateral direction of the sample film were calculated, and the larger one of the two average values was adopted as the thermal shrinkage rate of the mold release film. Thermal shrinkage rate = {(length before shrinkage - length after shrinkage)/length before shrinkage} × 100 (%)

### Mold Releasability of Ion Exchange Resin

An autograph ("AGS-X" available from Shimadzu Corporation) was used to measure the release force when the ion exchange layer was released from the mold release film at an angle of 180° and a speed of 600 mm/min with respect to the test piece (laminate) having a width of 25 mm, and the release force was evaluated according to the following criteria.

Ⓞ: less than 25 mN/25 mm
∘: 25 mN/25 mm or more and less than 50 mN/25 mm
△: 50 mN/25 mm or more and less than 100 mN/25 mm
×: 100 mN/25 mm or more

### Production Example 1 of Mold Release Film

PET was used as a substrate film (substrate layer), and a mold release film 1 was produced by dry laminating the OPP1 as a mold release layer on the substrate film. That is, 18 parts by mass of a dry laminating adhesive "TM-570V" available from Toyo-Morton, Ltd. and 1 part by mass of a curing agent therefor "CAT-RT37" were dissolved in ethyl acetate and adjusted to achieve a solid content of 35 mass% to produce a coating liquid (adhesive). This coating liquid was applied onto PET (substrate layer) using a Mayer bar, to achieve a weight after drying of 2.0 g/m², and dried at 80°C for 30 seconds. On the side of the adhesive layer (intermediate layer) with an average thickness of 2 µm produced after drying, the corona-treated surface of the OPP1 was superposed and bonded by dry lamination to produce a mold release film 1.

### Production Example 2 of Mold Release Film

A mold release film 2 was produced in the same manner as in Production Example 1 except that CPP was used as the mold release layer.

### Production Example 3 of Mold Release Film

A mold release film 3 was produced in the same manner as in Production Example 2 except that PEN was used as the substrate film.

### Production Example 4 of Mold Release Film

A mold release film 4 was produced in the same manner as in Production Example 1 except that LLDPE was used as the mold release layer.

### Example 1

An application liquid was prepared by mixing 4 parts by mass of an ion exchange resin solution 1 and 1 part by mass of 2-propanol. The application liquid was coated on the mold release layer of the mold release film 1 using a Mayer bar to achieve a thickness after drying of 20 µm, then dried at 100°C for 3 minutes, and heat-treated at 160°C for 30 minutes to produce a laminate 1 including an electrolyte membrane (ion exchange layer 1).

In addition, a laminate 2 including an electrolyte membrane (ion exchange layer 2) on the mold release layer of the mold release film 1 was produced in the same manner as in the above operation except that an application liquid was prepared using ion exchange resin solution 2 instead of the ion exchange resin solution 1 and without using 2-propanol (the ion exchange resin solution 2 was directly used as the application liquid).

### Examples 2 and 3

Laminates 1 and 2 were each produced in the same manner as in Example 1 except that the mold release film 2 (Example 2) or the mold release film 3 (Example 3) was used instead of the mold release film 1.

### Comparative Example 1

Laminates 1 and 2 were produced in the same manner as in Example 1 except that the mold release film 4 was used instead of the mold release film 1.

### Comparative Example 2

Laminates 1 and 2 were produced in the same manner as in Example 1 except that OPP2 was used as the mold release film.

### Comparative Example 3

Laminates 1 and 2 were produced in the same manner as in Example 1 except that OPP3 was used as the mold release film.

### Comparative Example 4

Laminates 1 and 2 were produced in the same manner as in Example 1 except that PTFE was used as the mold release film.

The evaluation results of the produced mold release films and laminates are shown below.

### [Table 1]

**Table 1**

| | Mold release film | | | Laminate | | | |
|---|---|---|---|---|---|---|---|
| | Substrate layer | Mold release layer | Thermal dimensional change rate (%) | Ion exchange layer 1 | | Ion exchange layer 2 | |
| | | | | Release force [mN/25 mm] | Mold releasability | Release force [mN/25 mm] | Mold releasability |
| Example 1 | PET | OPP1 | 2.3 | 40 | ○ | 21 | Ⓞ |
| Example 2 | PET | CPP | 1.0 | 16 | Ⓞ | 18 | Ⓞ |
| Example 3 | PEN | CPP | 0.4 | 20 | Ⓞ | 19 | Ⓞ |
| Comparative Example 1 | PET | LLDPE | 1.2 | 98 | Δ | 72 | Δ |
| Comparative Example 2 | - | OPP2 | 8.0 | 35 | ○ | 18 | Ⓞ |
| Comparative Example 3 | - | OPP3 | 4.7 | 30 | ○ | 22 | Ⓞ |
| Comparative Example 4 | - | PTFE | 2.5 | 125 | × | 88 | Δ |

As is clear from the results shown in Table 1, the mold release films of the Examples had low thermal shrinkage rates and excellent handleability, and were able to effectively suppress the occurrence of curling and wrinkling due to thermal shrinkage. Among the Examples, Examples 2 and 3 in which CPP was used had particularly low thermal shrinkage rate and excellent handleability.

The laminates of the Examples showed a low release force and also excellent mold releasability with respect to the ion exchange layer. Although the CPP used in Examples 2 and 3 had higher heat sealability (or thermo-weldability) than that of OPP, it unexpectedly showed superior mold releasability to that of Example 1. In particular, in Examples 2 to 3, mold releasability was good even with respect to the ion exchange layer 1 containing an ion exchange resin having a lower equivalent weight (or a higher ion exchange capacity) than that of the ion exchange layer 2.

### Industrial Applicability

The mold release film of the present disclosure is excellent in handleability (resistance to curling and wrinkling due to thermal shrinkage, releasing associated therewith, and the like) and mold releasability (moderate releasability and steady contact) even when used in a high-temperature environment for a heating treatment or the like, and thus can be used as a mold release film in various fields such as foods, pharmaceuticals, chemicals, optical members, and electric/electronic materials, for example, a mold release film for a polymer layer. In particular, the mold release film also has moderate releasability from and steady contact with an ion exchange layer, and thus can be suitably used as a mold release film for producing a membrane electrode assembly (MEA) of a solid polymer type fuel cell, i.e., as a film for producing an MEA by layering thereon an electrolyte membrane and/or electrode membrane containing an ion exchange resin, and then being released from the MEA. In addition, even if the ion exchange layer contains an ion exchange resin having a low equivalent weight (or a large ion exchange capacity), the mold release film has moderate mold releasability, and is particularly suitable as a mold release film for producing an MEA.

## Claims

1. A mold release film comprising at least
a substrate layer; and
a mold release layer directly or indirectly layered on at least one surface of the substrate layer, the mold release layer containing a polypropylene-based resin.

2. The mold release film according to claim 1, wherein the substrate layer contains a metal and/or a resin, and the resin contains at least one selected from the group consisting of a polyolefin-based resin, a polyvinyl alcohol-based resin, a polyester-based resin, a polyamide-based resin, a polyimide-based resin, and a cellulose derivative.

3. The mold release film according to claim 1 or 2, wherein the substrate layer contains at least a polyalkylene arylate-based resin.

4. The mold release film according to any one of claims 1 to 3, wherein an average thickness of the substrate layer is from 5 to 500 µm.

5. The mold release film according to any one of claims 1 to 4, wherein the mold release film has a thermal shrinkage rate of 4.0% or less when subjected to a heating treatment under conditions of 160°C and 15 minutes.

6. A mold release film comprising at least a mold release layer containing a polypropylene-based resin, wherein the mold release film has a thermal shrinkage rate of 4.0% or less when subjected to a heating treatment under conditions of 160°C and 15 minutes.

7. The mold release film according to any one of claims 1 to 6, wherein the mold release layer is formed of a non-stretched film containing the polypropylene-based resin.

8. The mold release film according to any one of claims 1 to 7, wherein a proportion of a propylene unit with respect to all constituent units of the polypropylene-based resin is 50 mol% or greater.

9. The mold release film according to any one of claims 1 to 8, wherein an average thickness of the mold release layer is from 1 to 100 µm.

10. The mold release film according to any one of claims 1 to 9, wherein the mold release film is a mold release film for an ion exchange layer containing an ion exchange resin.

11. A laminate comprising at least
the mold release film described in any one of claims 1 to 10; and
an ion exchange layer layered on a mold release layer of the mold release film, the ion exchange layer containing an ion exchange resin.

12. The laminate according to claim 11, wherein the ion exchange resin is a fluororesin having a sulfonic acid group or a salt thereof in a side chain of the fluororesin, and the ion exchange layer is an electrolyte membrane and/or an electrode membrane.

13. The laminate according to claim 11 or 12, wherein the ion exchange resin has an equivalent weight of 1000 g/mol or less.

14. The laminate according to any one of claims 11 to 13, wherein a release force when the mold release film and the ion exchange layer are released from each other is 100 mN/25 mm or less.

15. A method for producing a membrane electrode assembly of a solid polymer type fuel cell, the method comprising releasing the mold release film from the laminate described in any one of claims 11 to 14.

16. The production method according to claim 15, further comprising at least heating at a temperature from 140 to 180°C before the releasing.
